# FASCICULE DE BREVET EUROPEEN

(11) **EP 2 875 328 B1**
(45) Date de publication et mention de la délivrance du brevet: **14.02.2018**
(21) Numéro de dépôt: 13752846.9
(22) Date de dépôt: 23.07.2013
(51) Int. Cl.: G01M 3/22, G01M 3/38

(54) **PROCEDE ET INSTALLATION DE DETECTION POUR LE CONTROLE D'ETANCHEITE DE PRODUITS SCELLES**
DETEKTIONSVERFAHREN UND -ANLAGE ZUR LECKÜBERPRÜFUNG VON ABGEDICHTEN PRODUKTEN
DETECTION METHOD AND FACILITY FOR CHECKING SEALED PRODUCTS FOR LEAKS

(30) Priorité: 23.07.2012 FR 1202082
(43) Date de publication de la demande: 27.05.2015
(73) Titulaire: Pfeiffer Vacuum, 74000 Annecy (FR)
(72) Inventeur: BOUNOUAR, Julien, F-74000 Annecy (FR); PALISSON, Julien, F-74330 Sillingy (FR); BUNOD, Philippe, F-74230 Serraval (FR); RIOUFRAYS, Sylvain, F-74700 Sallanches (FR); HADJ-RABAH, Smail, F-74000 Annecy (FR)
(74) Mandataire: Croonenbroek, Thomas Jakob
(86) Numéro de dépôt international: PCT/EP2013/065541
(87) Numéro de publication internationale: WO 2014/016308

(56) Documents cités:
- EP-A1- 2 042 849
- WO-A1-95/00827
- WO-A1-99/46572
- US-A- 3 824 839
- US-A1- 2008 113 519
- US-A1- 2010 313 634
- US-A1- 2011 113 862
- NADEZHDINSKII ET AL: "Diode laser spectroscopy: precise spectral line shape measurements", SPECTROCHIMICA ACTA. PART A: MOLECULAR AND BIOMOLECULAR SPECTROSCOPY, ELSEVIER, AMSTERDAM, NL, vol. 52, no. 8, 30 juillet 1996 (1996-07-30), pages 1041-1060, XP027532143, ISSN: 1386-1425 [extrait le 1996-07-30]
- MITRA B ET AL: "The Detection of Chemical Vapors in Air Using Optical Emission Spectroscopy of Pulsed Microdischarges From Two-and Three-Electrode Microstructures", IEEE SENSORS JOURNAL, IEEE SERVICE CENTER, NEW YORK, NY, US, vol. 8, no. 8, 1 août 2008 (2008-08-01), pages 1445-1454, XP011231394, ISSN: 1530-437X, DOI: 10.1109/JSEN.2008.920720

## Description

### DOMAINE TECHNIQUE

La présente invention concerne un procédé de détection pour le contrôle d'étanchéité de produits scellés tels que les produits pharmaceutiques, alimentaires, ou des produits issus de l'industrie des biotechnologies, de l'industrie automobile ou de l'industrie cosmétique. La présente invention concerne également une installation de détection associée pour la mise en oeuvre dudit procédé de détection.

### ETAT DE LA TECHNIQUE

Certains produits tels que les plaquettes operculées, sachets, flacons, poches, sacs pharmaceutiques ou médicaux, sont scellés dans un emballage à pression atmosphérique ou sous vide, pour conserver leur intégrité.

Pour s'assurer que le scellement soit parfaitement étanche, on teste l'étanchéité du produit scellé. Le test doit garantir le scellement avec une bonne sensibilité pour différents types de produits, secs ou liquides, souples ou rigides, opaques ou transparents... Pour les industries pharmaceutique et agroalimentaire, ce test est essentiel pour assurer la stabilité du médicament ou du produit alimentaire en le protégeant de l'humidité, de l'air et des bactéries.

Il existe plusieurs méthodes pour contrôler l'étanchéité des produits scellés. Toutefois, ces méthodes présentent certains inconvénients.

On connaît par exemple la méthode de contrôle d'étanchéité dite « au bleu de Méthylène ». Cette méthode consiste à immerger le produit scellé dans une solution colorée au bleu de méthylène. Une inspection visuelle du produit scellé permet de détecter une éventuelle migration de la solution colorée dans l'échantillon et donc, de déceler d'éventuelles fuites de l'emballage. La sensibilité de la détection de fuite est de l'ordre de 10⁻² mbar.l/s. Cette méthode est rapide et simple à mettre en oeuvre mais le test est destructif et la sensibilité n'est pas suffisante.

Une autre méthode connue consiste à réaliser un test à l'hélium. Cette méthode fait appel à la détection du passage de l'hélium à travers les fuites. On utilise de cette façon la propriété de l'hélium qui traverse les petites fuites plus aisément que les autres gaz, du fait de la petite taille de sa molécule.

Pour cela, on remplit de manière contrôlée l'intérieur de l'emballage avec un gaz traceur hélium avant le scellement du produit. Puis, on détecte à l'aide d'un détecteur de fuites la présence éventuelle du gaz traceur autour de l'échantillon. L'échantillon est soit placé dans une chambre de test étanche mise sous vide, soit on utilise un détecteur de fuite dit « renifleur » et la mesure dans ce cas s'effectue à pression atmosphérique. La détection doit être faite pour des concentrations d'hélium bien supérieures à la concentration naturelle de l'hélium dans l'air et parfaitement connues. Ces méthodes présentent une très haute sensibilité de mesure, généralement supérieure à 10⁻⁸ mbar.l/s.

Toutefois après le test, l'échantillon ne peut pas être replacé directement dans la ligne de conditionnement puisqu'il est rempli de gaz hélium. En outre, la mise en oeuvre de cette méthode est relativement complexe et coûteuse. De plus, même après avoir purgé l'hélium que le produit contenait pour le test, il est nécessaire d'attendre un certain temps que l'échantillon soit dépollué. Enfin, lors de la détection d'un échantillon défectueux présentant une grosse fuite, de l'hélium s'échappe dans la chambre de test. Après le retrait de l'échantillon défectueux, il est alors nécessaire de purger l'hélium résiduel présent dans la chambre de test, qui pourrait fausser une mesure ultérieure.

D'autres méthodes existantes permettent l'utilisation du produit scellé testé et révélé intègre. On connaît par exemple une méthode de contrôle d'étanchéité de récipients scellés basée sur la spectroscopie d'absorption accordable diode laser. Un faisceau laser divergent est transmis à travers les parois opposées d'un récipient étanche et, est focalisé sur un détecteur. On mesure l'accumulation de gaz tels que l'oxygène, l'humidité et le dioxyde de carbone dans l'échantillon à travers l'emballage. Après une mesure de quelques jours (cinq jours pour le suivi de l'oxygène), il est possible de déceler avec une bonne sensibilité si les quantités de gaz mesurées sont stables ou évoluent, une augmentation ou une diminution de ces gaz pouvant traduire la présente d'une fuite. Cependant, la durée du test ne permet pas d'intervenir rapidement sur une ligne de production défectueuse. Elle implique en outre l'utilisation d'un lieu de stockage pour la réalisation de mesures sensibles. De plus, cette méthode ne s'applique pas aux produits liquides.

D'autres principes de mesure nécessitent que l'emballage soit souple et par conséquent, ne s'appliquent pas à tous les types de produits. C'est le cas par exemple pour certains principes de mesure optique ou par jauges de contrainte, qui suivent la déformation sous vide de l'emballage. Par ailleurs, la sensibilité de ces mesures est limitée car celles-ci ne peuvent pas être facilement étalonnées. Un autre exemple encore de procédé de détection de fuite dans des produits scellés est donné par le document WO99/46572.

### EXPOSE DE L'INVENTION

Les méthodes connues sont donc soit destructives et les produits scellés testés ne peuvent pas être utilisés ; soit elles manquent de sensibilité et des fuites peuvent alors exister sans être détectées et endommager le produit ; soit ces méthodes sont spécifiques à un type particulier de produit et on ne peut pas contrôler l'étanchéité de tous les produits avec la même méthode de mesure ; soit les méthodes sont trop coûteuses.

En industrie, la tendance actuelle tend à durcir les tests d'intégrité et à systématiser ces derniers. Selon les différents types de produits et d'emballages, le seuil de refus peut varier entre 10⁻³ mbar.l/s et 10⁻⁶ mbar.l/s. Aussi, ces industries recherchent-elles une méthode de contrôle d'étanchéité non destructive et de bonne sensibilité pour pouvoir être utilisée pour un contrôle en ligne.

Un but de la présente invention est de pallier cet inconvénient au moins partiellement en proposant une méthode de détection pour le contrôle d'étanchéité de produits scellés qui soit non destructive et qui présente une bonne sensibilité de mesure.

Un autre but de la présente invention est que la méthode puisse être appliquée à différents types de produits, notamment secs ou liquides et à tous types d'emballages, notamment optiquement transparents ou non, souples ou rigides.

A cet effet, l'invention a pour objet un procédé de détection pour le contrôle d'étanchéité de produits scellés selon la revendication 1. A basse pression, c'est-à-dire à une pression de vide secondaire au moins inférieure à 10⁻¹ mbar, et en l'absence de fuites, l'air qui était présent dans l'enceinte est évacué et l'atmosphère résiduelle est majoritairement constituée de vapeur d'eau issue du dégazage des parois. Le gaz contenu dans le produit scellé est donc en principe absent de l'atmosphère de l'enceinte, celle-ci contenant majoritairement de la vapeur d'eau.

Le procédé de détection utilise le fait que les produits scellés contiennent une atmosphère gazeuse emprisonnée entre l'élément à protéger et l'emballage. Le suivi de l'évolution des espèces gazeuses contenues dans ce volume gazeux et sa comparaison avec des évolutions calibrées de concentration d'espèce gazeuse de référence permet donc d'identifier la présence d'une fuite du produit scellé.

L'analyse par spectrométrie d'émission optique ou de masse permet de détecter de très petites quantités d'espèces gazeuses ionisées en temps réel, c'est-à-dire sans temps d'attente isolé du pompage nécessaire à l'accumulation de molécules de gaz à surveiller comme ce peut être le cas dans certaines méthodes de détection de l'état de la technique. Le temps nécessaire au contrôle d'étanchéité est donc réduit. Ceci est rendu possible par une mise sous vide secondaire, indispensable pour distinguer l'air ambiant et ses constituants de l'air contenu dans le produit scellé.

Le procédé de détection peut comporter une étape préalable de détection de grosses fuites, avant d'abaisser la pression dans l'enceinte à une pression de vide secondaire, dans laquelle on surveille l'évolution dans l'enceinte de la concentration d'au moins une espèce gazeuse. On définit par «grosses fuites », les fuites dont le débit est supérieur à 10⁻²mbars.l/s.

L'étape préalable de détection permet d'éviter qu'en cas de grosses fuites, l'abaissement de la pression à une pression de vide secondaire provoque également le pompage de tout le gaz contenu dans la cavité du produit scellé à travers la grosse fuite et donc la non-détection de la grosse fuite. Un capteur de gaz simple et à bas cout, permet ainsi la détection d'une grosse fuite du produit scellé, avec une sensibilité de détection telle que de l'ordre du ppmv (partie par million en volume) à la pression atmosphérique ou en vide grossier.

Au cours de l'étape préalable de détection de grosses fuites, on peut soit laisser la pression de l'enceinte à la pression ambiante atmosphérique, soit abaisser la pression à une pression de vide grossier, supérieure à 1 mbar, pour accélérer la diffusion du mélange gazeux (gaz contenu dans le produit scellé et gaz de l'enceinte) vers le capteur de gaz.

Egalement, dans l'étape de détection de grosses fuites, on peut remplacer l'atmosphère de l'enceinte contenant le produit scellé par un gaz de purge pour surveiller l'évolution dans l'enceinte de la concentration d'au moins une espèce gazeuse du volume gazeux contenu dans le produit scellé, distincte du gaz de purge.

Au cours de l'étape préalable de détection de grosses fuites et au cours de l'étape de détection en vide secondaire, l'espèce gazeuse surveillée peut être une espèce gazeuse distinctive de l'air comme l'azote ou l'oxygène. En effet de nombreux produits scellés, comme ceux de l'industrie pharmaceutique ou agroalimentaire, sont scellés sous air. L'air comprenant environ 78% d'azote et 20% d'oxygène, ces deux espèces gazeuses sont facilement identifiables dans l'enceinte en cas de fuite du produit scellé.

Certains produits sont scellés sous atmosphère d'azote pour éviter l'oxydation de l'élément à protéger, en particulier dans l'industrie alimentaire pour une fermeture stérile notamment de sachets de conditionnement. La surveillance de l'évolution de la concentration d'azote permet dans ce cas-là d'indiquer une fuite du produit scellé.

En cas de fuite ou d'éclatement de l'emballage, l'air ou l'azote du produit présentent l'avantage de pouvoir être facilement et rapidement évacués de l'enceinte, à la différence de l'hélium des tests de l'art antérieur, qui nécessite de longues minutes de pompage de l'enceinte avant que celle-ci puisse être réutilisée pour un nouveau contrôle d'étanchéité.

Dans l'industrie pharmaceutique, certains matériaux biologiques sont scellés sous une atmosphère comprenant un gaz neutre, tel que de l'argon afin d'éviter l'altération de ces matériaux biologiques. Ceci est le cas en particulier pour l'ADN (acide désoxyribonucléique) qui risque d'être altéré une fois extrait des tissus vivants, notamment par l'eau ou l'oxygène. Le scellage sous argon peut également être utilisé dans l'industrie alimentaire, notamment pour la conservation de la viande.

Le scellage sous argon est aussi utilisé dans le domaine automobile.

Certains produits peuvent être scellés sous un mélange gazeux, notamment un mélange d'argon et d'azote, par exemple pour des réservoirs d'extinction d'incendie.

Dans ces cas, l'espèce gazeuse à surveiller peut donc être de l'argon.

L'hélium n'est pas une espèce gazeuse retenue comme indicateur d'une fuite du produit scellé du fait de la faible proportion d'hélium dans l'air et donc de la proportion infime d'hélium qui pourrait s'échapper d'un produit scellé contenant de l'air. Egalement, du fait de sa difficulté à être évacué, l'hélium peut présenter un bruit de fond important par rapport aux concentrations dont on chercherait à surveiller l'évolution.

Le procédé de détection peut donc être mis en oeuvre pour le contrôle d'étanchéité de différents types de produits scellés, notamment secs ou liquides, transparents ou opaques, souples ou rigides, à partir du moment où ils contiennent un volume gazeux.

Il n'est donc pas nécessaire de percer et reboucher l'emballage pour le remplir de gaz traceur, ni de sceller le produit avec un gaz traceur comme dans certains procédés de l'art antérieur. Aucune étape particulière n'est nécessaire entre le scellement du produit en production, le contrôle d'étanchéité et la mise en commercialisation du produit scellé sans fuites.

Le procédé de détection est donc non destructif car il n'endommage pas le conditionnement ni son contenu, le produit scellé pouvant être replacé directement, c'est-à-dire sans traitement spécifique de nettoyage ou autre, dans la ligne de conditionnement.

Enfin, le procédé de détection présente une bonne sensibilité de mesure, de l'ordre de 10⁻⁶ mbar.l/s, au cours de l'étape de détection en vide secondaire. L'espèce gazeuse étant surveillée par analyse par spectrométrie d'émission optique, on surveille l'évolution du rapport des intensités d'une raie spectrale de l'espèce gazeuse surveillée, par exemple d'une raie spectrale distinctive d'azote ou d'oxygène sur une raie spectrale distinctive de vapeur d'eau dans le spectre représentatif des espèces gazeuses présentes dans l'enceinte. On surveille par exemple l'évolution du rapport des intensités d'une raie spectrale distinctive d'azote sur une raie spectrale distinctive de vapeur d'eau. Bien entendu, le rapport des intensités peut être réalisé avec une espèce autre que la vapeur d'eau.

En effet, l'atmosphère de l'enceinte comporte très souvent de la vapeur d'eau provenant de l'humidité de l'air entré avec le produit scellé ou du dégazage des parois. Le spectre des espèces gazeuses présentes dans l'enceinte contient donc toujours une raie distinctive de vapeur d'eau. Ainsi, au cas où la fenêtre optique du détecteur de gaz captait moins de lumière, par exemple du fait de son encrassement, faisant perdre de l'intensité au signal transmis à l'unité de traitement, on s'assure que la mesure donnée par le rapport des raies reste valable et représentatif de l'évolution de la pression partielle d'air. En outre, le suivi du rapport des intensités d'une raie spectrale distinctive de l'air sur une raie spectrale distinctive de vapeur d'eau permet de normaliser l'intensité de la raie spectrale distinctive de l'air pour s'assurer que l'évolution de celle-ci soit bien représentative de la pression partielle d'air.

On compare en outre le rapport des intensités de la raie spectrale de l'espèce gazeuse surveillée telle qu'une raie spectrale distinctive de l'air et d'une raie spectrale distinctive de vapeur d'eau, avec des rapports d'intensité obtenus pour une pluralité de fuites calibrées au cours d'une descente en pression dans l'enceinte, pour quantifier la fuite.

Selon un autre aspect, on refroidit le produit scellé au cours de la mesure. On limite ainsi le dégazage de l'emballage du produit scellé à basse pression ce qui permet de diminuer le temps de mesure et donc d'augmenter la cadence des contrôles.

L'invention a aussi pour objet une installation de détection pour le contrôle d'étanchéité de produits scellés selon la revendication 7. L'installation peut comporter au moins une fuite calibrée raccordée à l'enceinte. Les fuites calibrées peuvent être utilisées ponctuellement entre deux mesures pour corriger une éventuelle dérive du détecteur de gaz ionisés.

Selon un premier aspect, l'unité de traitement est en outre configurée pour quantifier ladite fuite par comparaison avec des courbes d'étalonnages du détecteur de gaz ionisés obtenues au cours d'une descente en pression dans l'enceinte pour une pluralité de fuites calibrées, stockées dans la mémoire de l'unité de traitement.

La mesure est faite par analyse par spectrométrie d'émission optique et le détecteur de gaz ionisés comporte :
- une chambre apte à être mise en communication avec l'enceinte,
- un spectromètre d'émission optique raccordé à une fenêtre optique de la chambre, et
- un dispositif de génération de plasma agencé autour de la chambre, formant un moyen d'ionisation des gaz du détecteur de gaz ionisés, apte à générer un plasma sur les espèces gazeuses présentes dans la chambre.

Selon un autre aspect, la mesure peut être faite par analyse par spectrométrie de masse et dans ce cas, le détecteur de gaz ionisés est un spectromètre de masse.

L'installation de détection peut comporter des moyens de maintien du produit scellé de manière à limiter sa déformation lors de la mise sous vide notamment dans le cas d'emballages souples qui ne présentent pas une résistance mécanique suffisante. Ces moyens de maintien comportent avantageusement un moyen de refroidissement pour diminuer le temps de mesure.

Un autre moyen de diminuer le temps de mesure peut être de limiter la vapeur d'eau présente dans l'enceinte en prévoyant que l'enceinte comporte un piège froid, tel qu'un piège cryogénique.

L'installation de détection peut également comporter un moyen d'injection d'un gaz de purge apte à introduire un gaz de purge dans l'enceinte au cours de l'étape préalable de détection de grosses fuites pour le contrôle d'étanchéité du produit scellé et pour le retour à la pression atmosphérique après la mise sous vide de l'enceinte.

L'installation de détection peut également comporter un capteur de gaz, tel qu'un capteur de gaz oxygène, pour surveiller l'évolution dans l'enceinte de la concentration d'oxygène dans l'étape préalable de détection de grosses fuites.

### DESCRIPTION SOMMAIRE DES DESSINS

D'autres caractéristiques et avantages de l'invention ressortiront de la description suivante, donnée à titre d'exemple, sans caractère limitatif, en regard des dessins annexés sur lesquels:
- la figure 1 représente une vue en perspective d'une installation de détection pour le contrôle d'étanchéité de produits scellés,
- la figure 2a montre une vue schématique d'éléments de l'installation de détection de la figure 1,
- la figure 2b montre une vue schématique d'éléments d'une installation de détection selon un deuxième exemple de réalisation,
- la figure 3 montre une vue en perspective d'un exemple de produit pharmaceutique scellé,
- la figure 4 représente un exemple de réalisation d'un détecteur de gaz ionisés,
- la figure 5 représente un organigramme d'un procédé de détection pour le contrôle d'étanchéité de produits scellés, mis en oeuvre dans l'installation de détection de la figure 1,
- la figure 6a est un graphique de l'évolution (en secondes en abscisse) de la pression (en mbar sur l'ordonnée de droite) d'une enceinte d'installation de détection contenant un produit scellé intègre et de l'évolution des intensités des raies spectrales distinctive (en unités arbitraires sur l'ordonnée de gauche) d'azote et de vapeur d'eau,
- la figure 6b est un graphique similaire à la figure 6a pour l'enceinte contenant un produit scellé dont l'emballage est défectueux,
- la figure 7 est un graphique d'un exemple de courbes d'étalonnages du détecteur de gaz ionisés obtenues pour plusieurs pressions dans l'enceinte de l'installation de détection et pour plusieurs fuites calibrées, et
- la figure 8 est un graphique du suivi du rapport des intensités d'une raie spectrale distinctive d'azote sur une raie spectrale distinctive d'hydrogène, en fonction du temps (en secondes) dans l'enceinte sans produit scellé (courbe A), contenant un produit scellé intègre (courbe B) et contenant deux produits scellés dont les emballages sont défectueux (courbes C et D).

### DESCRIPTION DES MODES DE REALISATION PREFERES

Sur les figures, les éléments identiques portent les mêmes numéros de référence. Les étapes du procédé sont numérotées à partir de 100.

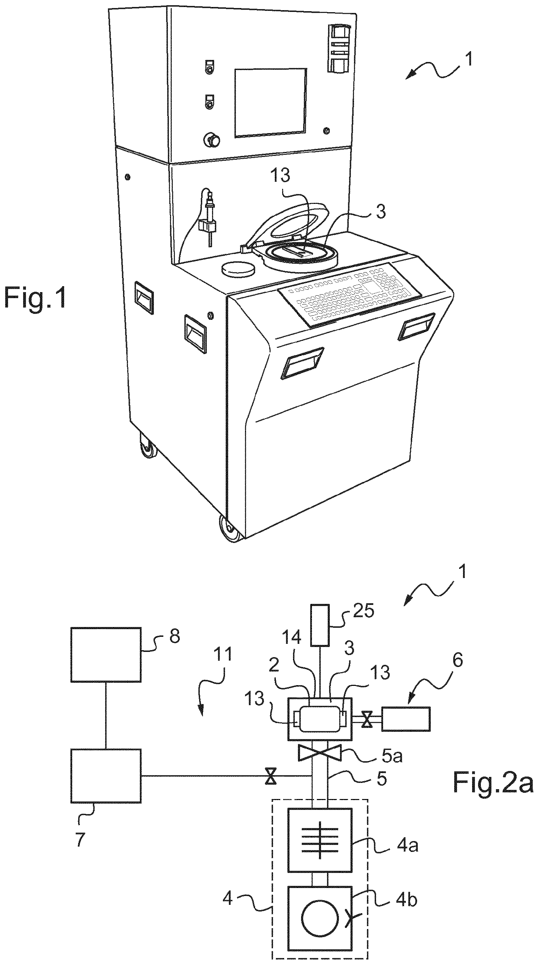

La figure 1 représente une installation de détection 1 pour le contrôle d'étanchéité de produits scellés 2.

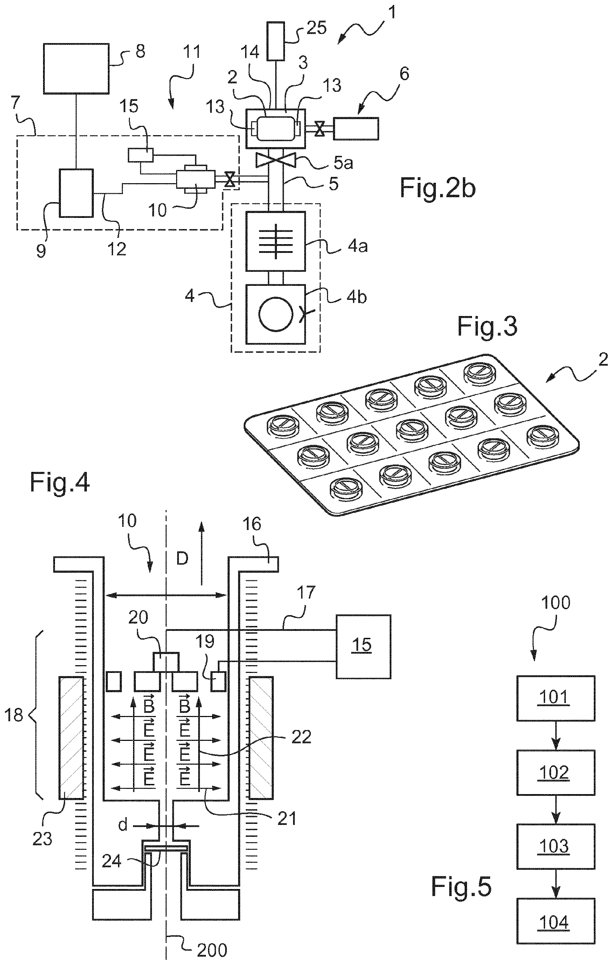

Les produits scellés 2 sont par exemple des produits pharmaceutiques ou alimentaires, tels que des plaquettes operculées (figure 3), des sachets, flacons, poches, sacs pharmaceutiques ou médicaux. Les produits scellés 2 peuvent également être des produits issus de l'industrie des biotechnologies ou de l'industrie automobile.

Ces produits contiennent au moins un élément à protéger, par exemple de l'humidité, de l'air ou des bactéries, tel qu'un médicament ou une denrée alimentaire. L'élément à protéger peut se présenter sous forme liquide ou solide. Il est empaqueté dans un emballage scellé. Un scellement intègre garantit que l'accès à l'intérieur de l'emballage est impossible, aucun gaz ne peut entrer ou sortir de l'emballage.

Le produit scellé 2 contient un volume gazeux, comme de l'air, entre l'élément à protéger et son emballage. D'autres exemples de gaz de scellage dans le volume gazeux du produit scellé 2 sont donnés par la suite. La pression du volume gazeux contenu dans le produit scellé 2 est donc constante. Ce peut être la pression atmosphérique ou une pression sub-atmosphérique pour des emballages dits « sous vide », suivant leur conditionnement.

Comme on peut le voir sur la figure 2a, l'installation de détection 1 comporte une enceinte 3 configurée pour recevoir au moins un produit scellé 2 à tester, un groupe de pompage 4 fluidiquement raccordé à l'enceinte 3 par une canalisation 5 via une vanne d'isolation 5a, un détecteur de gaz ionisés 7 et un capteur de gaz 25 fluidiquement raccordés à l'enceinte 3 et une unité de traitement 8 connectée au détecteur de gaz ionisés 7 pour recevoir de ce dernier, des signaux représentatifs de l'évolution d'espèces gazeuses.

L'installation de détection 1 comporte un moyen d'introduction d'un gaz de purge 6 apte à introduire un gaz de purge dans l'enceinte 3 pour le contrôle d'étanchéité du produit scellé 2 et pour le retour à la pression atmosphérique après la mise sous vide de l'enceinte 3.

L'installation 1 peut également comporter au moins une fuite calibrée raccordée à l'enceinte. On entend par fuite calibrée, une fuite dont on connaît les caractéristiques. Les fuites calibrées peuvent être utilisées pour l'étape préalable de calibration ou ponctuellement entre deux mesures pour corriger une éventuelle dérive du détecteur de gaz ionisés 7. Pour ce faire, on peut injecter un gaz test avec un débit connu pour étalonner le détecteur de gaz ionisés 7. Selon un exemple de réalisation, l'installation est raccordée à un distributeur de l'espèce gazeuse que l'on cherche à déceler, une bouteille de gaz par exemple, et à un moyen de contrôle du débit de l'espèce gazeuse.

Comme on peut le voir sur la figure 1, l'installation de détection 1 peut également comporter un moyen de maintien 13 du produit scellé 2 de manière à limiter sa déformation lors de la mise sous vide notamment dans le cas d'emballages souples qui ne présentent pas une résistance mécanique suffisante.

Ces moyens de maintien 13 comportent avantageusement un moyen de refroidissement. Le moyen de refroidissement comporte par exemple un serpentin d'eau de refroidissement ou des éléments Peltier.

Le moyen de refroidissement permet de contrôler la température de l'emballage du produit scellé 2 en la réduisant par exemple à une température inférieure à 20°C, telle que 10°C. On peut ainsi refroidir le produit scellé 2 au cours de la mesure, ce qui limite le dégazage de l'emballage du produit scellé 2 à basse pression et permet donc de diminuer le temps de mesure et donc d'augmenter la cadence des contrôles.

Un autre moyen de diminuer le temps de mesure peut être de limiter la vapeur d'eau présente dans l'enceinte 3 en prévoyant que l'enceinte 3 comporte un piège froid 14, tel qu'un piège cryogénique, comme schématisé sur la figure 2a.

L'enceinte 3 est adaptée pour pouvoir être mise sous vide. Le groupe de pompage 4 comporte une pompe à vide primaire 4b et une pompe à vide turbomoléculaire 4a, aptes à fournir un vide secondaire en pression de vide limite dans l'enceinte 3 inférieure à 10⁻¹ mbar, telle que de l'ordre de 10⁻⁵mbar.

La pompe à vide primaire 4b et la pompe à vide turbomoléculaire 4a sont raccordées en série, l'entrée de la pompe à vide turbomoléculaire 4a étant raccordée à la sortie de l'enceinte 3.

L'enceinte 3 présente un volume qui peut contenir un ou plusieurs produits scellés 2 et qui présente des dimensions légèrement supérieures au volume du ou des produits scellés 2 à tester, de manière à limiter au maximum l'absorption des gaz par les surfaces de l'enceinte 3 lorsque celle-ci est à pression atmosphérique pour le chargement/déchargement du produit scellé 2. On limite ainsi le dégazage des parois de l'enceinte 3 à basse pression qui pourrait augmenter le bruit de fond. De plus, un volume juste un peu plus grand que le volume du produit scellé 2 permet d'abaisser plus rapidement la pression dans l'enceinte 3 et donc d'améliorer le temps de réponse et la sensibilité de la mesure, le volume de mesure étant égal au volume de l'enceinte 3 à laquelle on a soustrait le volume du produit scellé 2.

Le capteur de gaz 25 est par exemple un capteur d'oxygène, par exemple basé sur la technologie à base de dioxyde de zirconium, apte à mesurer des concentrations d'oxygène avec une sensibilité de détection de l'ordre du ppmv à pression atmosphérique ou en vide grossier. Ce capteur de gaz est simple, à bas cout et permet la détection d'une grosse fuite du produit scellé 2.

En pratique, le détecteur de gaz ionisés 7 peut être raccordé à la canalisation 5 raccordant le groupe de pompage 4 à l'enceinte 3, de manière à rester sous basse pression lors du chargement et du déchargement du produit scellé 2 dans l'enceinte 3 à pression atmosphérique.

Selon un premier exemple de réalisation représenté en figure 2a, le détecteur de gaz ionisés 7 est un spectromètre de masse configuré pour mesurer l'évolution de la concentration d'au moins une espèce gazeuse dans l'enceinte 3.

Le spectromètre de masse comporte une source d'ionisation, au moins un analyseur et un moyen d'acquisition.

La source d'ionisation est configurée pour ioniser le gaz à mesurer de l'enceinte 3, formant le moyen d'ionisation des gaz du détecteur de gaz ionisés 7.

L'analyseur sépare les ions générés selon leur rapport m/z où m représente la masse et z la valence (ou m/q, q représentant la charge). L'analyseur est par exemple un analyseur quadripolaire comprenant un quadripôle (ou quadrupôle) formé de quatre électrodes parallèles de section hyperbolique ou cylindrique.

Les moyens d'acquisition comptent les ions et amplifient le signal. On obtient ainsi un spectre de masse représentant les rapports m/z des ions détectés en fonction de l'abondance relative de ces ions.

Selon un autre exemple de réalisation représenté sur les figures 2b et 4, le détecteur de gaz ionisés 7 comporte un spectromètre d'émission optique 9, une chambre 10 apte à être mise en communication fluidique avec l'enceinte 3 et un dispositif de génération de plasma 11. Le dispositif de génération de plasma 11 est configuré pour ioniser le gaz à mesurer de l'enceinte 3 dans la chambre 10, formant le moyen d'ionisation des gaz du détecteur de gaz ionisés 7.

En spectrométrie par émission optique, les molécules chargées (ions) sont séparées en fonction de la longueur d'onde à laquelle elles émettent. L'amplitude d'un pic du spectre (ou raie spectrale) correspond à l'abondance relative d'un fragment de molécule.

Selon un exemple de réalisation, le dispositif de génération de plasma 11 comporte une source de plasma et un générateur de courant continu 15.

Mieux visible sur la figure 4, la chambre cylindrique 10 est délimitée par des parois 16 en un matériau conducteur résistant au vide, tel que par exemple l'acier inoxydable. La chambre 10 est raccordée à la canalisation 5 par son extrémité ouverte. Ainsi, la mise sous vide de la chambre cylindrique 10 peut être réalisée grâce au groupe de pompage 4 raccordé à l'enceinte 3, elle-même sous vide. Un plasma est généré à l'intérieur de cette chambre 10 afin de permettre d'analyser les espèces gazeuses présentes dans l'enceinte 3.

La source de plasma est formée d'une anode 17 (pôle +) et d'une cathode 18 (pôle -) respectivement connectées aux pôles positif et négatif du générateur de tension continue 15. La cathode 18 comprend les parois 16 qui délimitent la chambre cylindrique 10 et un disque 19 perforé. L'anode 17 de type filaire est placée au centre de la cathode 18 dont elle est isolée par un support 20 en matériau diélectrique à faible taux de dégazage, comme par exemple une céramique, posé sur la surface du disque 19 de la cathode 18.

Le générateur 15 applique entre l'anode 17 (chargée positivement) et la cathode 18 (chargée négativement) une forte différence de potentiel, de l'ordre de 3000 Volts, qui génère un champ électrique E 21 intense de direction transverse par rapport à l'axe 200 de la source de plasma. Ce champ 21 permet de créer un plasma par génération et accélération d'un flux d'électrons de la cathode 18 vers l'anode 17 afin d'exciter et ioniser les molécules gazeuses provenant de l'enceinte 3. Pour obtenir un plasma exploitable, on lui adjoint un champ magnétique B 22 d'intensité constante, environ 100 mT, et de direction donnée, perpendiculaire au champ électrique 21 et parallèle à l'axe 200. Le champ magnétique 21 est généré par au moins un aimant 23 torique permanent entourant la chambre cylindrique 11. La présence d'un champ magnétique B 22 couplé au champ électrique E 21 permet d'augmenter fortement l'excitation des molécules de gaz du plasma. Ainsi la source plasma est générée par l'action combinée d'un champ électrique 21 constant entre deux électrodes 17, 18 à géométrie cylindrique et d'un champ magnétique 22 constant, parallèle à la surface des électrodes 17, 18 et orthogonal au champ électrique 21.

Le plasma généré sur les espèces gazeuses présentes dans la chambre 10 émet de la lumière provenant de la désexcitation des molécules caractéristiques des gaz présents.

La chambre cylindrique 10 comporte une fenêtre optique, telle qu'un hublot transparent 24. La lumière qui traverse la fenêtre optique est recueillie par exemple par un système collecteur optique et analysée spectralement par le spectromètre d'émission optique (EOS) 9 reliés optiquement par une fibre 12 qui transporte la lumière du collecteur optique vers le spectromètre 9. Le spectromètre optique 9 établit le spectre caractéristique des espèces gazeuses présentes dans la chambre 10. Les longueurs d'ondes des raies du spectre optique ainsi obtenu sont caractéristiques des espèces gazeuses présentes dans l'enceinte 3.

Un tel détecteur de gaz ionisés est par exemple décrit dans la demande de brevet WO 2009/027156 du nom de la Demanderesse.

En fonctionnement, le procédé de détection 100 pour le contrôle d'étanchéité de produits scellés 2 mis en oeuvre dans l'installation de détection 1 comporte les étapes suivantes (figure 5).

Dans une première étape 101, on place au moins un produit qui a été scellé 2 au préalable sous atmosphère d'air, d'azote ou d'argon dans l'enceinte 3. Cette première étape 101 est réalisée à la pression de l'atmosphère régnant à l'extérieure de l'enceinte 3, par exemple la pression atmosphérique.

Dans une étape préalable de détection de grosses fuites 102, on surveille l'évolution dans l'enceinte 3 de la concentration d'au moins une espèce gazeuse.

Par exemple, dans le cas d'un produit qui a été scellé au préalable sous une atmosphère distincte de l'air, telle que sous atmosphère d'argon ou d'azote, on surveille l'évolution dans l'enceinte 3 de la concentration d'au moins une espèce gazeuse de l'enceinte 3, telle que l'oxygène.

En présence d'une grosse fuite, le volume gazeux contenu dans le produit scellé 2 migre dans l'enceinte 3, ce qui abaisse la concentration des espèces gazeuses de l'air présent dans l'enceinte 3, telle que l'oxygène. La diminution de la concentration d'oxygène dans l'enceinte 3 indique alors la présence d'une grosse fuite.

Selon un autre exemple, on remplace l'atmosphère de l'enceinte 3 contenant le produit scellé 2 par un gaz de purge, telle que l'azote ou l'argon, et on surveille l'évolution dans l'enceinte 3 de la concentration d'au moins une espèce gazeuse du volume gazeux contenu dans le produit scellé 2, distincte du gaz de purge, telle que l'oxygène.

L'étape préalable de détection permet d'éviter qu'en cas de grosses fuites, l'abaissement de la pression à une pression de vide secondaire provoque également le pompage de tout le gaz contenu dans la cavité du produit scellé 2 à travers la grosse fuite et donc la non-détection de la grosse fuite.

Au cours de l'étape de détection de grosses fuites 102, on peut soit laisser la pression de l'enceinte 3 à la pression ambiante atmosphérique, soit abaisser la pression à une pression de vide grossier, supérieure à 1mbar, pour accélérer la diffusion du mélange gazeux (gaz contenu dans le produit scellé et gaz de l'enceinte 3) vers le capteur de gaz 25.

Puis dans une deuxième étape de détection 103, si aucune grosse fuite n'est détectée, on abaisse la pression dans l'enceinte 3 à une pression de vide secondaire au moins inférieure à 10⁻¹ mbar, en mettant en communication l'enceinte 3 et le groupe de pompage 4 maintenu continuellement sous vide.

Lorsque la pression dans l'enceinte atteint une pression de vide secondaire, par exemple inférieure à 10⁻² mbar, tout en poursuivant le pompage sous vide secondaire dans l'enceinte 3, on ionise les gaz contenus dans l'enceinte 3 pour surveiller l'évolution dans l'enceinte 3 de la concentration d'au moins une espèce gazeuse ionisée du volume gazeux contenu dans le produit scellé parmi l'azote, l'oxygène ou l'argon, par analyse par spectrométrie d'émission optique ou de masse et, on compare l'évolution de la concentration de l'espèce gazeuse à des évolutions calibrées de concentration d'une espèce gazeuse de référence pour identifier la présence d'une fuite du produit scellé (étape 103).

A basse pression et en l'absence de fuites, l'air qui était présent dans l'enceinte 3 est évacué et l'atmosphère résiduelle est majoritairement constituée de vapeur d'eau issue du dégazage des parois. Le gaz contenu dans le produit scellé 2 est donc en principe absent de l'atmosphère de l'enceinte 3, celle-ci contenant majoritairement de la vapeur d'eau.

L'étape de détection en vide secondaire 103 et l'étape préalable de détection de grosses fuites 102, utilisent le fait que les produits scellés 2 contiennent une atmosphère gazeuse emprisonnée entre l'élément à protéger et l'emballage. Le suivi de l'évolution des espèces gazeuses contenues dans ce volume gazeux et sa comparaison avec des évolutions calibrées d'une espèce gazeuse de référence permet donc d'identifier la présence d'une fuite du produit scellé 2.

L'analyse par spectrométrie d'émission optique ou de masse permet de détecter de très petites quantités d'espèces gazeuses ionisées en temps réel, c'est-à-dire sans temps d'attente isolé du pompage nécessaire à l'accumulation de molécules de gaz à surveiller comme ce peut être le cas dans certaines méthodes de détection de l'état de la technique. Le temps nécessaire au contrôle d'étanchéité est donc réduit. Ceci est rendu possible par une mise sous vide secondaire, indispensable pour distinguer l'air ambiant et ses constituants de l'air contenu dans le produit scellé 2.

Au cours de l'étape de détection en vide secondaire 103 et de l'étape préalable de détection de grosses fuites 102, l'espèce gazeuse surveillée peut être une espèce gazeuse distinctive de l'air comme l'azote ou l'oxygène. En effet de nombreux produits scellés, comme ceux de l'industrie pharmaceutique ou agroalimentaire, sont scellés sous air. L'air comprenant environ 78% d'azote et 20% d'oxygène, ces deux espèces gazeuses sont facilement identifiables dans l'enceinte 3 en cas de fuite du produit scellé 2.

Certains produits sont scellés sous atmosphère d'azote pour éviter l'oxydation de l'élément à protéger, en particulier dans l'industrie alimentaire pour une fermeture stérile notamment de sachets de conditionnement. La surveillance de l'évolution de la concentration d'azote permet dans ce cas-là d'indiquer une fuite du produit scellé.

Ainsi, en cas de fuite ou d'éclatement de l'emballage, l'air ou l'azote du produit peut être facilement et rapidement évacué de l'enceinte 3, à la différence de l'hélium des tests de l'art antérieur, qui nécessite de longues minutes de pompage de l'enceinte avant que celle-ci puisse être réutilisée pour un nouveau contrôle d'étanchéité.

En plus, dans le cas où l'espèce gazeuse est surveillée par mesure par spectrométrie d'émission optique, l'azote présente l'avantage de produire un spectre optique qui est facile à interpréter. En outre, un plasma d'azote est facile à amorcer.

Dans l'industrie pharmaceutique, certains matériaux biologiques sont scellés sous une atmosphère comprenant un gaz neutre, tel que de l'argon afin d'éviter l'altération de ces matériaux biologiques. Ceci est le cas en particulier pour l'ADN (acide désoxyribonucléique) qui risque d'être altéré une fois extrait des tissus vivants, notamment par l'eau ou l'oxygène. Le scellement sous argon peut également être utilisé dans l'industrie alimentaire, notamment pour la conservation de la viande.

Le scellement sous argon est aussi utilisé dans le domaine automobile.

Certains produits peuvent être scellés sous un mélange gazeux, notamment un mélange d'argon et d'azote, par exemple pour des réservoirs d'extinction d'incendie.

L'espèce gazeuse à surveiller peut donc être l'argon.

L'hélium n'est pas une espèce gazeuse retenue comme indicateur d'une fuite du produit scellé du fait de la faible proportion d'hélium dans l'air et donc de la proportion infime d'hélium qui pourrait s'échapper d'un produit scellé contenant de l'air. Egalement, du fait de sa difficulté à être évacué, l'hélium peut présenter un bruit de fond important par rapport aux concentrations dont on chercherait à surveiller l'évolution.

Selon un premier exemple de réalisation, la pression dans l'enceinte 3 est abaissée à une pression dite de vide limite, c'est-à-dire que le pompage est maximum et qu'aucun gaz n'est introduit dans l'enceinte 3 et la ligne de pompage comprenant la canalisation 5 et le groupe de pompage 4. La mesure est ainsi particulièrement sensible car le gaz qui pourrait provenir du volume gazeux contenu dans un produit scellé 2 défectueux est peu dilué.

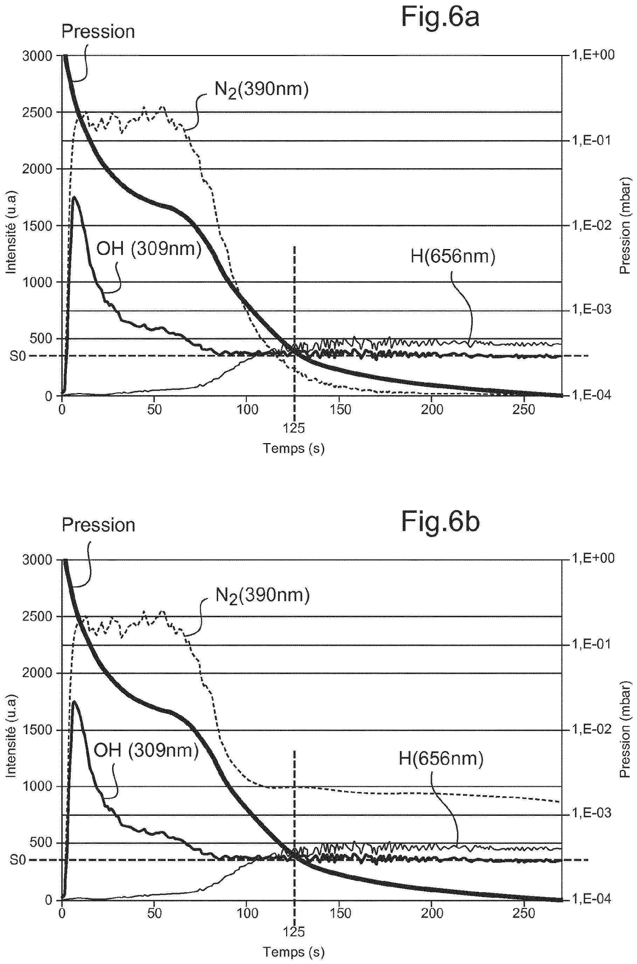

Les graphiques représentés sur les figures 6a et 6b montrent un exemple de contrôle d'étanchéité d'emballages de produits scellés par surveillance de l'évolution de la concentration d'une espèce gazeuse dans l'enceinte 3, qui est présente dans l'air d'un produit scellé par mesure par spectroscopie d'émission optique.

Le graphique de la figure 6a représente l'évolution de la descente en pression en vide limite dans une enceinte 3 contenant un produit scellé 2 intègre.

Dans cet exemple, l'espèce gazeuse surveillée est l'azote. On surveille par exemple la raie spectrale d'azote à 390 nm.

On constate sur cette figure qu'après environ 200 secondes de pompage, l'azote qui était présent dans l'enceinte 3 est totalement évacué, l'intensité de la raie distinctive d'azote suivie étant alors quasiment nulle, c'est-à-dire de l'ordre de l'intensité du bruit de fond. L'atmosphère résiduelle est alors majoritairement constituée de vapeur d'eau issue du dégazage des parois.

On a également représenté sur ce graphique, l'évolution des raies spectrales d'hydrogène à 656 nm et de la molécule OH à 309 nm comme raies distinctives de vapeur d'eau. Les raies spectrales distinctives de vapeur d'eau sont celles des espèces gazeuses constituées d'un ou de plusieurs atomes d'hydrogène tels que H₂ ou H, constituées d'un ou de plusieurs atomes d'oxygène tels que O₂ (l'oxygène pouvant être un produit généré dans un plasma de vapeur d'eau) et constituées d'un ou de plusieurs atomes d'hydrogène et d'oxygène, tels que H₂O ou OH.

Les intensités des raies spectrales distinctives d'hydrogène et d'OH après pompage, restent importantes, ce qui indique que l'atmosphère résiduelle est majoritairement constituée de vapeur d'eau.

L'air est donc absent de l'atmosphère de l'enceinte 3 de sorte que le suivi temporel des espèces gazeuses surveillées, des espèces gazeuses d'air dans cet exemple, et leur comparaison à une évolution calibrée, permet d'indiquer la présence d'une fuite du produit scellé 2.

Dans l'exemple illustré sur la figure 6a, le seuil prédéterminé SO est par exemple 200 unités arbitraires d'intensité de la raie spectrale distinctive d'azote à 390 nm après 125 secondes de mise sous vide ou à une pression dans l'enceinte 3 de 3.10⁻⁴ mbar.

Sur la figure 6b représentant l'évolution de la descente en pression en vide limite dans l'enceinte 3 contenant un produit scellé défectueux, on constate que l'intensité de la raie spectrale distinctive de la raie d'azote est supérieure à ce seuil prédéterminé S0, ce qui traduit la présence d'une fuite du produit.

Selon cet exemple, l'évolution de l'espèce gazeuse surveillée, telle que l'azote, est dont comparée à l'évolution calibrée de cette espèce gazeuse, ici l'azote, en l'absence de fuite (figure 6a) servant de référence.

Selon un exemple de mise en oeuvre par mesure par spectrométrie d'émission optique, on surveille l'évolution du rapport des intensités d'une raie spectrale de l'espèce gazeuse surveillée, par exemple une raie spectrale distinctive de l'air, et d'une raie spectrale distinctive de vapeur d'eau de l'enceinte 3. Bien entendu, le rapport de raie peut être réalisé avec une espèce autre que la vapeur d'eau.

En effet, l'atmosphère de l'enceinte 3 comporte très souvent de la vapeur d'eau : à haute pression, l'enceinte 3 contient la vapeur d'eau provenant de l'humidité de l'air entré avec le produit scellé 2 et, à basse pression l'enceinte 3 contient la vapeur d'eau provenant du dégazage des parois. Le spectre des espèces gazeuses présentes dans l'enceinte 3 contient donc souvent une raie distinctive de vapeur d'eau, telle que la raie spectrale distinctive d'H ou d'OH. Ainsi, au cas où la fenêtre optique de la chambre 10 du détecteur de gaz ionisés 7 captait moins de lumière, par exemple du fait de son encrassement, faisant perdre de l'intensité au signal transmis à l'unité de traitement 8, on s'assure que la mesure donnée par le rapport des raies reste valable et représentatif de l'évolution de la pression partielle d'air. En outre, le suivi du rapport des intensités d'une raie spectrale distinctive de l'air sur une raie spectrale distinctive de vapeur d'eau permet de normaliser l'intensité de la raie spectrale distinctive de l'air pour s'assurer que l'évolution de celle-ci soit bien représentative de la pression partielle d'air.

Dans ce cas, l'évolution de l'espèce gazeuse surveillée, telle que l'azote, est donc comparée à des évolutions calibrées du rapport de raie spectrale de cette espèce gazeuse, ici l'azote sur une raie distinctive de vapeur d'eau, en l'absence de fuite ou selon le taux de fuite.

Dans une quatrième étape 104, on compare le rapport des intensités de la raie spectrale de l'espèce gazeuse surveillée, par exemple de la raie spectrale distinctive d'air, et d'une raie spectrale distinctive de vapeur d'eau, avec des courbes d'étalonnages stockées dans la mémoire de l'unité de traitement 8, pour quantifier la fuite.

Les courbes d'étalonnage sont réalisées avec les mêmes conditions que le procédé de détection 100. Elles fournissent la correspondance entre les rapports des intensités de la raie spectrale de l'espèce gazeuse surveillée, par exemple une raie spectrale distinctive de l'air et d'une raie spectrale distinctive de vapeur d'eau pour différentes fuites calibrées à différentes pressions dans l'enceinte 3 de l'installation de détection 1. Les courbes d'étalonnage permettent ainsi de faire correspondre les signaux obtenus par le détecteur de gaz ionisés 7 en des valeurs de fuites quantifiées en mbar.l/s.

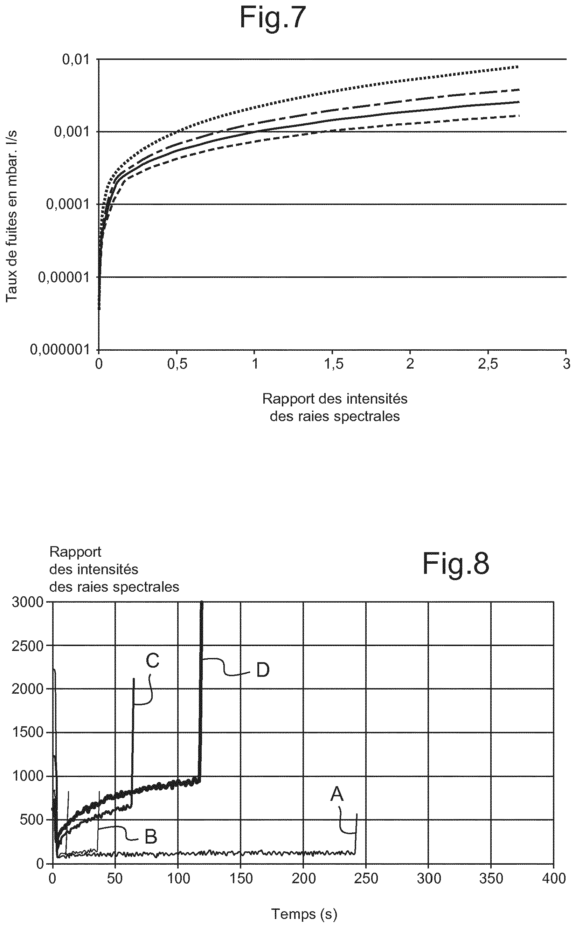

La figure 7 illustre ainsi un exemple de courbes d'étalonnages d'un détecteur de gaz ionisés 7.

Les courbes d'étalonnage donnent également une indication de la descente en pression dans l'enceinte 3 au cours du temps. Le taux de dégazage des parois de l'enceinte 3 dépend de la pression dans l'enceinte 3 en vide limite. Le dégazage et la pression diminuent au cours du temps et par conséquent, la proportion de vapeur d'eau dans l'enceinte 3 diminue également, augmentant la sensibilité de détection du détecteur de gaz ionisés 7.

Ainsi, à partir de la pression dans l'enceinte 3 ou de la durée de mise sous vide du produit scellé 2, et du rapport des intensités des raies spectrales distinctives, les courbes d'étalonnage font correspondre une valeur quantifiée de la fuite qui est indépendante du taux de dégazage de l'air des parois de l'enceinte 3.

Différents exemples de contrôles d'étanchéité d'emballages de produits scellés sont représentés sur le graphique de la figure 8.

Dans ces exemples, on surveille l'évolution du rapport des intensités d'une raie spectrale distinctive d'azote à 390 nm et d'une raie spectrale distinctive d'hydrogène à 656 nm.

Dans un test préalable, on abaisse la pression dans l'enceinte 3 à une pression de vide limite de l'ordre de 5.10⁻⁵ mbar et on mesure le niveau du bruit de fond dans l'enceinte 3 (courbe A). A basse pression, l'azote qui était présent dans l'enceinte 3 a été évacué et l'atmosphère résiduelle de l'enceinte 3 est alors majoritairement constituée de vapeur d'eau issue du dégazage des parois de l'enceinte 3. Le rapport des intensités des raies d'azote et d'hydrogène est quasiment nul car la raie spectrale distinctive d'azote n'est pas présente dans le spectre.

Puis, on place un produit scellé 2 qui ne présente pas de fuites dans l'enceinte 3 et on abaisse la pression dans l'enceinte 3 à une pression de vide limite (courbe B). Le rapport des intensités des raies d'azote et d'hydrogène augmente légèrement à cause du dégazage d'azote des parois du produit scellé 2. Ce rapport représente donc le bruit de fond.

Puis, on teste deux produits scellés 2 défectueux.

L'augmentation temporelle du rapport des intensités est l'indicateur que les produits scellés C et D présentent une fuite. L'air présent dans le produit scellé 2 migre dans l'enceinte 3 de sorte que la concentration des espèces gazeuses de l'air devient supérieure à la concentration gazeuse de l'air dans l'enceinte 3 en l'absence de fuites.

Sur le graphique de la figure 8, on constate également que la fuite du produit scellé D est plus importante que celle du produit scellé C. En effet, plus le rapport des intensités des raies augmente rapidement et plus la fuite est importante.

On constate également que le signal du rapport des intensités n'est pas constant au cours du temps. En effet, au fur et à mesure de la descente en pression, le dégazage des parois de l'enceinte 3 diminue. La comparaison de l'évolution du rapport des intensités de la raie spectrale distinctive d'azote sur la raie spectrale distinctive d'hydrogène, avec des courbes d'étalonnage de rapport d'intensités de fuites calibrées à différentes pressions réalisées sur l'enceinte 3 de l'installation de détection 1 permet de déduire l'effet du dégazage des parois de l'enceinte 3 dans la quantification du taux de fuite.

Ainsi, le taux de fuite du deuxième produit scellé (courbe C) présente un taux de fuite de l'ordre de 5,2.10⁻⁵ mbar.l/s et le taux de fuite du troisième produit scellé (courbe D) présente un taux de fuite plus important de l'ordre de 10⁻⁴ mbar.l/s.

Le procédé de détection 100 peut donc être mis en oeuvre pour le contrôle d'étanchéité de différents types de produits scellés, notamment secs ou liquides, transparents ou non, souples ou rigides, à partir du moment où ils contiennent un volume gazeux.

Il n'est donc pas nécessaire de percer et reboucher l'emballage pour remplir le produit scellé de gaz traceur, ni de sceller le produit avec un gaz traceur comme dans certains procédés de l'art antérieur. Aucune étape particulière n'est nécessaire entre le scellement du produit en production, le contrôle d'étanchéité et la mise en commercialisation du produit scellé sans fuites.

Le procédé de détection 100 est donc non destructif car il n'endommage pas le conditionnement ni son contenu, le produit scellé 2 pouvant être replacé directement, c'est-à-dire sans traitement spécifique de nettoyage ou autre, dans la ligne de conditionnement. De plus, le procédé de détection 100 présente une bonne sensibilité de mesure.

## Revendications

1. Procédé de détection pour le contrôle d'étanchéité de produits scellés comportant les étapes suivantes :
- on place au moins un produit qui a été scellé (2) au préalable sous atmosphère d'air, d'azote, ou d'argon, dans une enceinte (3) (étape 101), **caractérisé en ce que**:
- on abaisse la pression dans l'enceinte (3) à une pression de vide secondaire inférieure à 10⁻¹ mbar et, tout en poursuivant le pompage sous vide secondaire dans l'enceinte (3), on ionise les gaz contenus dans l'enceinte pour surveiller l'évolution dans l'enceinte (3) de la concentration d'au moins une espèce gazeuse ionisée du volume gazeux contenu dans le produit scellé (2), l'espèce gazeuse étant l'azote, pour identifier la présence d'une fuite dudit produit scellé (2) par analyse par spectrométrie d'émission optique (étape 103),
- en surveillant l'évolution du rapport des intensités d'une raie spectrale distinctive d'azote sur une raie spectrale distinctive de vapeur d'eau dans le spectre représentatif des espèces gazeuses présentes dans l'enceinte (3), et
- en comparant le rapport des intensités de la raie spectrale distinctive de l'air et d'une raie spectrale distinctive de vapeur d'eau, avec des rapports d'intensité obtenus pour une pluralité de fuites calibrées au cours d'une descente en pression dans l'enceinte pour quantifier la fuite.

2. Procédé de détection selon la revendication 1, **caractérisé en ce qu'**avant d'abaisser la pression dans l'enceinte (3) à une pression de vide secondaire, le procédé de détection comporte une étape préalable de détection de grosses fuites (étape 102) dans laquelle on surveille l'évolution dans l'enceinte de la concentration d'au moins une espèce gazeuse.

3. Procédé de détection selon la revendication 2, **caractérisé en ce que** dans l'étape de détection de grosses fuites, on surveille la concentration d'oxygène.

4. Procédé de détection selon l'une des revendications 2 ou 3, **caractérisé en ce que** dans l'étape de détection de grosses fuites, on abaisse la pression dans l'enceinte (3) à une pression de vide grossier, supérieure à 1mbar.

5. Procédé de détection selon l'une des revendications 2 à 4, **caractérisé en ce que** dans l'étape de détection de grosses fuites, on remplace l'atmosphère de l'enceinte contenant le produit scellé par un gaz de purge et on surveille l'évolution dans l'enceinte de la concentration d'au moins une espèce gazeuse du volume gazeux contenu dans le produit scellé, distincte du gaz de purge.

6. Procédé de détection selon l'une des revendications précédentes, **caractérisé en ce qu'**on abaisse la pression dans l'enceinte (3) à une pression de vide secondaire au moins inférieure à 10⁻² mbar.

7. Installation de détection pour le contrôle d'étanchéité de produits scellés comportant :
- une enceinte (3) configurée pour recevoir au moins un produit qui a été scellé (2) sous atmosphère d'air, d'azote ou d'argon,
- un groupe de pompage (4) comportant une pompe à vide primaire (4b) et une pompe à vide turbomoléculaire (4a) raccordées en série, l'entrée de la pompe à vide turbomoléculaire (4a) étant raccordée à la sortie de l'enceinte (3),
- un détecteur de gaz ionisés (7) comportant un moyen d'ionisation des gaz, raccordé à l'enceinte (3), le détecteur de gaz ionisés comportant :
- une chambre apte à être mise en communication avec l'enceinte,
- un spectromètre d'émission optique raccordé à une fenêtre optique de la chambre, et
- un dispositif de génération de plasma agencé autour de la chambre, formant un moyen d'ionisation des gaz du détecteur de gaz ionisés, apte à générer un plasma sur les espèces gazeuses présentes dans la chambre,
- une unité de traitement (8) connectée au détecteur de gaz ionisés (7) pour recevoir des signaux représentatifs de l'évolution d'espèces gazeuses,
- **caractérisée en ce que** l'unité de traitement (8) est configurée pour surveiller l'évolution dans l'enceinte de la concentration d'au moins une espèce gazeuse ionisée du volume gazeux contenu dans le produit scellé, l'espèce gazeuse étant l'azote, et pour comparer l'évolution de la concentration de ladite espèce gazeuse ionisée à des évolutions calibrées de concentration d'espèce gazeuse de référence pour identifier la présence d'une fuite dudit produit scellé (2) par analyse par spectrométrie d'émission optique,
- en surveillant l'évolution du rapport des intensités d'une raie spectrale distinctive d'azote sur une raie spectrale distinctive de vapeur d'eau dans le spectre représentatif des espèces gazeuses présentes dans l'enceinte (3), et
- en comparant le rapport des intensités de la raie spectrale distinctive de l'air et d'une raie spectrale distinctive de vapeur d'eau, avec des rapports d'intensité obtenus pour une pluralité de fuites calibrées au cours d'une descente en pression dans l'enceinte pour quantifier la fuite.

## Patentansprüche

1. Detektionsverfahren für die Dichtigkeitskontrolle gekapselter Produkte, das die folgenden Schritte umfasst:
- Anordnen wenigstens eines Produkts, das vorher in einer Luft-, Stickstoff- oder Argonatmosphäre gekapselt worden ist (2), in einem Behälter (3) (Schritt 101),
**dadurch gekennzeichnet, dass**
- der Druck in dem Behälter (3) auf einen Sekundärunterdruck niedriger als 10⁻¹ mBar abgesenkt wird und unter Fortsetzung des Pumpens bei Sekundärunterdruck in dem Behälter (3) die in dem Behälter enthaltenen Gase ionisiert werden, um die Entwicklung in dem Behälter (3) der Konzentration wenigstens einer ionisierten Gasart des in dem gekapselten Produkt enthaltenen Gasvolumens zu überwachen, wobei die Gasart Stickstoff ist, um das Vorhandensein eines Lecks des gekapselten Produkts (2) durch Analyse mittels Spektrometrie der optischen Emission zu identifizieren (Schritt 103),
- wobei die Entwicklung des Verhältnisses der Intensitäten einer charakteristischen Stickstoff-Spektrallinie und einer charakteristischen Wasserdampf-Spektrallinie in dem Spektrum, das die in dem Behälter (3) vorhandenen Gasarten repräsentiert, überwacht wird, und
- wobei das Verhältnis der Intensitäten der charakteristischen Luft-Spektrallinie und einer charakteristischen Wasserdampf-Spektrallinie mit Intensitätsverhältnissen verglichen wird, die für mehrere kalibrierte Lecks während eines Druckabfalls in dem Behälter erhalten werden, um das Leck zu quantifizieren.

2. Detektionsverfahren nach Anspruch 1, **dadurch gekennzeichnet, dass** vor dem Erniedrigen des Drucks in dem Behälter (3) auf einen sekundären Unterdruck das Detektionsverfahren einen vorherigen Schritt des Detektierens großer Lecks (Schritt 102) umfasst, in dem die Entwicklung in dem Behälter der Konzentration wenigstens einer Gasart überwacht wird.

3. Detektionsverfahren nach Anspruch 2, **dadurch gekennzeichnet, dass** in dem Schritt des Detektierens großer Lecks die Sauerstoffkonzentration überwacht wird.

4. Detektionsverfahren nach einem der Ansprüche 2 oder 3, **dadurch gekennzeichnet, dass** in dem Schritt des Detektierens großer Lecks der Druck in dem Behälter (3) auf einen groben Unterdruck größer als 1 mBar abgesenkt wird.

5. Detektionsverfahren nach einem der Ansprüche 2 bis 4, **dadurch gekennzeichnet, dass** in dem Schritt des Detektierens großer Lecks die Atmosphäre in dem Behälter, der das gekapselte Produkt enthält, durch ein Spülgas ersetzt ist und dass die Entwicklung in dem Behälter der Konzentration wenigstens einer Gasart des in dem gekapselten Produkt enthaltenen Gasvolumens, die von dem Spülgas verschieden ist, überwacht wird.

6. Detektionsverfahren nach einem der vorhergehenden Ansprüche, **dadurch gekennzeichnet, dass** der Druck in dem Behälter (3) auf einen Sekundärunterdruck erniedrigt wird, der wenigstens kleiner als 10⁻² mBar ist.

7. Detektionsanlage für die Dichtigkeitskontrolle gekapselter Produkte, die Folgendes umfasst:
- einen Behälter (3), der konfiguriert ist, wenigstens ein Produkt aufzunehmen, das vorher in einer Luft-, Stickstoff- oder Argonatmosphäre gekapselt worden ist (2),
- eine Pumpgruppe (4), die eine Primärunterdruckpumpe (4b) und eine Turbomolekularunterdruck-Pumpe (4a), die miteinander in Reihe verbunden sind, enthält, wobei der Eingang der Turbomolekularunterdruck-Pumpe (4a) mit dem Ausgang des Behälters (3) verbunden ist,
- einen Detektor (7) für ionisierte Gase, der Gasionisierungsmittel enthält, die mit dem Behälter (3) verbunden sind, wobei der Detektor für ionisierte Gase Folgendes umfasst:
- eine Kammer, die in Kommunikation mit dem Behälter gebracht werden kann,
- ein Spektrometer für optische Emission, das mit einem optischen Fenster der Kammer verbunden ist, und
- eine Plasmaerzeugungsvorrichtung, die um die Kammer angeordnet ist und ein Mittel zum Ionisieren der Gase des Detektors für ionisierte Gase bildet, die ein Plasma aus den Gasarten, die in der Kammer vorhanden sind, erzeugen kann,
- eine Verarbeitungseinheit (8), die mit dem Detektor (7) für ionisierte Gase verbunden ist, um die Signale zu empfangen, die die Entwicklung der Gasarten repräsentieren,
- **dadurch gekennzeichnet, dass** die Verarbeitungseinheit (8) konfiguriert ist, die Entwicklung in dem Behälter der Konzentration wenigstens einer ionisierten Gasart des in dem gekapselten Produkt enthaltenen Gasvolumens zu überwachen und die Entwicklung der Konzentration der ionisierten Gasart mit kalibrierten Entwicklungen der Konzentration einer Referenzgasart zu vergleichen, um das Vorhandensein eines Lecks des gekapselten Produkts (2) durch Analyse mittels Spektrometrie der optischen Emission zu identifizieren,
- wobei die Entwicklung des Verhältnisses der Intensitäten einer charakteristischen Stickstoff-Spektrallinie und einer charakteristischen Wasserdampf-Spektrallinie in dem Spektrum, das die in dem Behälter (3) vorhandenen Gasarten repräsentiert, überwacht wird und
- wobei das Verhältnis der Intensitäten der charakteristischen Luft-Spektrallinie und einer charakteristischen Wasserdampf-Spektrallinie mit Intensitätsverhältnissen verglichen wird, die für mehrere kalibrierte Lecks während eines Druckabfalls in dem Behälter erhalten werden, um das Leck zu quantifizieren.

## Claims

1. Detection method for testing the leaktightness of sealed products, comprising the following steps:
- at least one product that has been previously sealed (2) in an air, nitrogen or argon atmosphere is placed in a chamber (3) (step 101),
**characterized in that**:
- the pressure in the chamber (3) is lowered to a high vacuum pressure of less than 10⁻¹ mbar and, while continuing the high vacuum pumping in the chamber (3), the gases contained in the chamber are ionized in order to monitor the evolution, in the chamber (3), of the concentration of at least one ionized gas species of the gas volume contained in the sealed product (2), the gas species being nitrogen, in order to identify the presence of a leak from said sealed product (2) via analysis by optical emission spectrometry (step 103),
- by monitoring the evolution of the ratio of the intensities of a distinctive spectral line of nitrogen to a distinctive spectral line of water vapour, in the spectrum representative of the gas species present in the chamber (3), and
- by comparing the ratio of the intensities of the distinctive spectral line of air and of a distinctive spectral line of water vapour with the intensity ratios obtained for a plurality of leaks calibrated in the course of a drop in pressure in the chamber in order to quantify the leak.

2. Detection method according to Claim 1, **characterized in that** before lowering the pressure in the chamber (3) to a high vacuum pressure, the detection method comprises a preliminary step of detecting major leaks (step 102) wherein the evolution, in the chamber, of the concentration of at least one gas species is monitored.

3. Detection method according to Claim 2, **characterized in that** in the step of detecting major leaks, the oxygen concentration is monitored.

4. Detection method according to either of Claims 2 and 3, **characterized in that** in the step of detecting major leaks, the pressure in the chamber (3) is lowered to a rough vacuum pressure, of greater than 1 mbar.

5. Detection method according to one of Claims 2 to 4, **characterized in that**, in the step of detecting major leaks, the atmosphere of the chamber containing the sealed product is replaced by a purge gas and the evolution, in the chamber, of the concentration of at least one gas species of the gas volume contained in the sealed product, different from the purge gas, is monitored.

6. Detection method according to one of the preceding claims, **characterized in that** the pressure in the chamber (3) is lowered to a high vacuum pressure at least of less than 10⁻² mbar.

7. Detection device for testing the leaktightness of sealed products, comprising:
- a chamber (3) configured in order to receive at least one product which has been sealed (2) under an air, nitrogen or argon atmosphere,
- a pumping unit (4) comprising a rough vacuum pump (4b) and a turbomolecular vacuum pump (4a) connected in series, the inlet of the turbomolecular vacuum pump (4a) being connected to the outlet of the chamber (3),
- an ionized gas detector (7) comprising a gas ionization means, connected to the chamber (3), the ionized gas detector comprising:
- an enclosure capable of being placed in communication with the chamber,
- an optical emission spectrometer connected to an optical window of the enclosure, and
- a plasma-generating device arranged around the enclosure, forming a gas ionization means of the ionized gas detector, capable of generating a plasma on the gas species present in the enclosure,
- a treatment unit (8) connected to the ionized gas detector (7) in order to receive signals representative of the evolution of gas species,
**characterized in that** the treatment unit (8) is configured to monitor the evolution, in the chamber, of the concentration of at least one ionized gas species of the gas volume contained in the sealed product, the gas species being nitrogen, and to compare the evolution of the concentration of said ionized gas species to calibrated evolutions of reference gas species concentration in order to identify the presence of a leak from said sealed product (2) via analysis by optical emission spectrometry,
- by monitoring the evolution of the ratio of the intensities of a distinctive spectral line of nitrogen to a distinctive spectral line of water vapour, in the spectrum representative of the gas species present in the chamber (3), and
- by comparing the ratio of the intensities of the distinctive spectral line of air and of a distinctive spectral line of water vapour with the intensity ratios obtained for a plurality of leaks calibrated in the course of a drop in pressure in the chamber in order to quantify the leak.
